# EUROPEAN PATENT SPECIFICATION

(11) **EP 3 703 094 B1**
(45) Date of publication and mention of the grant of the patent: **28.10.2026**
(21) Application number: 19810851.6
(22) Date of filing: 29.05.2019
(51) Int. Cl.: H01H 51/28, H02J 7/00, H01M 10/42, H01H 47/00, H01H 51/01, H01H 47/22, H01H 47/32

(54) **LATCH RELAY CAPABLE OF REAL-TIME STATE CONTROL, STATE CONTROL METHOD FOR LATCH RELAY, AND BATTERY PACK COMPRISING LATCH RELAY CAPABLE OF REAL-TIME STATE CONTROL**
VERRIEGELUNGSRELAIS MIT ECHTZEITZUSTANDSSTEUERUNGSFÄHIGKEIT, ZUSTANDSSTEUERUNG FÜR EIN VERRIEGELUNGSRELAIS UND BATTERIEPACK MIT EINEM VERRIEGELUNGSRELAIS MIT ECHTZEITZUSTANDSSTEUERUNGSFÄHIGKEIT
RELAIS DE VERROUILLAGE SUSCEPTIBLE DE COMMANDE D'ÉTAT EN TEMPS RÉEL, PROCÉDÉ DE COMMANDE D'ÉTAT DU RELAIS DE VERROUILLAGE ET BLOC-BATTERIE COMPRENANT UN RELAIS DE VERROUILLAGE SUSCEPTIBLE DE COMMANDE D'ÉTAT EN TEMPS RÉEL

(30) Priority: 01.06.2018 KR 20180063417
(43) Date of publication of application: 02.09.2020
(73) Proprietor: LG Energy Solution, Ltd., Seoul 07335 (KR)
(72) Inventor: PARK, Jaedong, Daejeon 34122 (KR); CHO, Hyunki, Daejeon 34122 (KR)
(74) Representative: Plasseraud IP
(86) International application number: PCT/KR2019/006418
(87) International publication number: WO 2019/231228

(56) References cited:
- WO-A1-2017/068764
- CN-U- 207 184 025
- JP-A- 2013 062 132
- JP-A- 2013 134 848
- JP-A- H08 171 844
- US-A- 4 412 267
- US-A- 4 418 374
- US-A1- 2013 215 549
- US-A1- 2014 002 093

## Description

### [Technical Field]

This application claims priority to and the benefit of Korean Patent Application No. 10-2018-0063417 filed in the Korean Intellectual Property Office on June 1, 2018.

The present invention relates to a latch relay capable of real-time state control, a state control method of the latch relay, and a battery pack including the latch relay capable of the real-time state control, and more particularly, to a latch relay capable of real-time state control, a state control method of the latch relay, and a battery pack including the latch relay capable of the real-time state control, which monitor a normal operation state in real time through whether the flow of minute current is maintained in an ON operation of the latch relay and allow the latch relay to be forcibly turned off through current prestored in a super capacitor when an OFF operation of the latch relay is not normally performed by an unexpected error.

### [Background Art]

In general, battery systems requiring high voltage and large capacity, such as electric vehicles or energy storage systems (ESS), are protected by switching elements such as relays.

When such a switching device cannot be normally driven by various failure modes, there is a demand for a protection device capable of stably blocking a circuit in a failure mode including a switch protection element, a driving circuit, and wires for protecting the battery system.

Meanwhile, in the case of a general relay used at this time, when the current is continuously conducted, the general relay keeps an ON state, and when the current is not conducted, the general relay keeps an OFF state and in order to prevent power consumption, a latch relay may be used instead of the general relay.

The latch relay is configured by combining an electromagnet and a permanent magnet and when a contact is made by pulling an iron plate through magnetic force of the electromagnet in a state where anode and cathode contacts are separated from each other (OPEN), the state is maintained through the magnetic force of the permanent magnet. For example, in order to release a bonding state of the iron plate, the magnetic force of the electromagnet is applied so as to face an opposite direction, so that the magnetic force of the permanent magnet is canceled and the contact between the anode and the cathode disappears.

When the latch relay using such a principle has an advantage of low power consumption, but power supplied to the latch relay is lost, or a reset coil (REST COIL) for turning off the latch relay is broken or the wire is broken by other failures, there is a problem that it is impossible to cope with in a dangerous situation of a battery.

### [Detailed Description of the Invention]

### [Technical Problem]

The present invention, which is contrived to solve the problem, has been made in an effort to provide a latch relay capable of real-time state control, a state control method of the latch relay, and a battery pack including the latch relay capable of the real-time state control, which monitor a normal operation state in real time through whether the flow of minute current is maintained when the latch relay is turned on and allow the latch relay to be forcibly turned off through current prestored in a super capacitor when an off operation of the latch relay is not normally performed due to an unexpected error.

The publication WO2017/068764A1 describes a latch relay capable of real-time state control, according to the preamble of claim 1. Further similar latch relays are disclosed in the publications US4412267A, US2013/215549A1 and CN207184025U.

### [Technical Solution]

The present invention is defined in the attached sheet of claims.

According to the present invention, a latch relay capable of real-time state control as set forth in claim 1 is provided.

In an embodiment, a current value of the first current may be smaller than a current value of current required when the anode and cathode contacts are bonded.

In an embodiment, the current storage unit may be periodically charged through current periodically supplied from the on coil unit.

In an embodiment, the current storage unit may be a super capacitor.

According to the present invention, a method for real-time state control of a latch relay as set forth in claim 7 is also provided.

In an embodiment, the storing of the current supplied from the on coil unit may include periodically charging the current storage unit through current periodically supplied from the on coil unit.

According the present invention, a battery pack includes a battery module, and a latch relay as set forth in claim 9 is provided as well.

### [Advantageous Effects]

According to an aspect of the present invention, there is an advantage that a power failure of a circuit can be confirmed in advance by monitoring a normal operation state in real time through whether the flow of minute current is maintained when a latch relay is turned on.

Further, according to an aspect of the present invention, there is an advantage that when an off operation of the latch relay is not normally performed due to an unexpected error, the latch relay is forcibly turned off through current prestored in a super capacitor, thereby rapidly controlling a circuit in a dangerous situation.

### [Brief Description of Drawings]

FIG. 1 is a diagram schematically illustrating a configuration of a general latch relay 1 in the related art.
FIG. 2 is a diagram schematically illustrating a configuration of a latch relay 100 capable of real-time state control according to an embodiment of the present invention.
FIG. 3 is a diagram illustrating a process of controlling a state of the latch relay 100 capable of the real-time state control illustrated in FIG. 2 in a sequential order.

### [Best Mode]

Hereinafter, a preferred embodiment is presented in order to assist understanding of the present invention. However, the following embodiment is just provided to more easily understand the present invention and contents of the present invention are not limited by the embodiment.

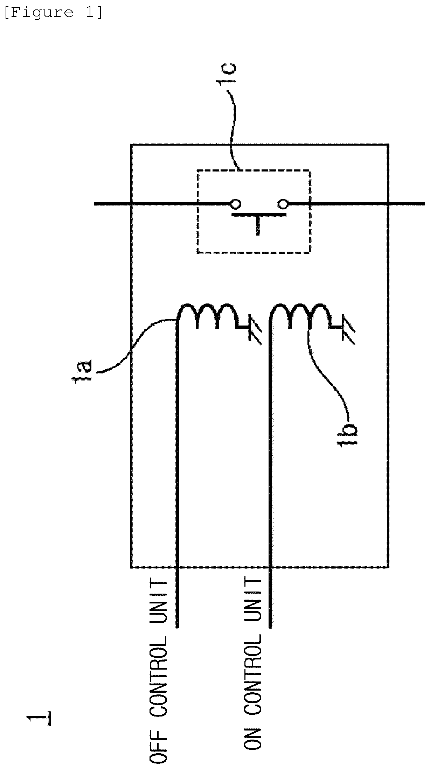

FIG. 1 is a diagram schematically illustrating a configuration of a general latch relay 1 in the related art.

Referring to FIG. 1, the general latch relay 1 is configured to include an off control unit 1a for off control, an on control unit 1b for on control, and anode and cathode contacts 1c.

In this case, when the current is conducted for a predetermined threshold time (for example, 50 to 100 ms) through the on control unit 1b, an iron plate connecting the anode and cathode contacts is attached by an electromagnet, so that an anode and a cathode are connected to each other, so that a bonding state of the iron plate is maintained by the electromagnet.

Further, when the current is conducted for the predetermined threshold time (e.g., 50 to 100 ms) through the off control unit 1a, magnetic force in an opposite direction for canceling the magnetic force of a two-way magnet is generated, and as a result, current conduction is removed while the iron plate is separated from the anode and cathode contacts.

However, in the case of the general latch relay 1 in the related art, the off control unit 1a may not normally operate due to power loss, a failure of the off control unit 1a or the on control unit 1b, disconnection, etc. This has a problem that the latch relay 1 as a switching element may be somewhat unreliable in that it is difficult to guarantee safety of circuit interception.

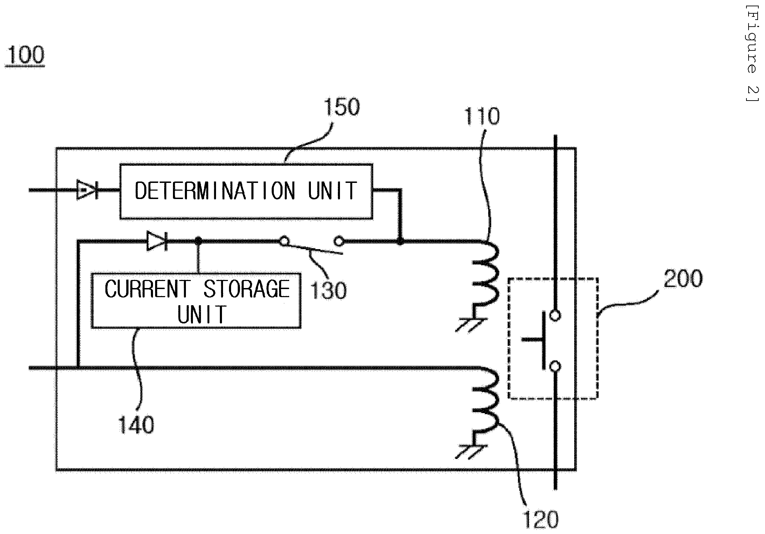

FIG. 2 is a diagram schematically illustrating a configuration of a latch relay 100 capable of real-time state control according to an embodiment of the present invention.

Referring to FIG. 2, the latch relay 100 capable of real-time state control according to an embodiment of the present invention is configured to largely include an off coil unit 110, an on coil unit 120, an additional control unit 130, and a current storage unit 140 and in an embodiment, the latch relay 100 is configured to additionally further include a determination unit 150.

First, the off coil unit 110 is positioned adjacent to the anode and cathode contacts 200 to release (or open) the bonding state of the iron plates included in the anode and cathode contacts 200.

The off coil unit 110 is connected to the on coil unit 120 through the additional control unit 130 and an on/off operation is controlled by the additional control unit 130.

The off coil unit 110 continuously applies a first current corresponding to a minute current to the anode and cathode contacts 200 while the anode and cathode contacts 200 are connected to each other and the determination unit 150 determines whether the first current is continuously applied.

As a determination result of the determination unit 150, when it is determined that the first current is not applied to the anode and cathode contacts 200 through the off coil unit 110, the current stored in the current storage unit 140 is allowed to be applied to the additional control unit 130.

In this case, a current value of the first current has a current value smaller than a current value required for the on operation of the anode and cathode contacts 200 and the determination unit 150 checks whether the first current value is continuously conducted in real time.

The on coil unit 120 is positioned adjacent to the anode and cathode contacts 200 while being parallel to the off coil unit 110 to serve to close the bonding state of the iron plates included in the anode and cathode contacts 200.

As the on coil unit 120 includes a permanent magnet (not illustrated), when the anode and cathode contacts 200 are connected by the on coil unit 120, a connection state of the anode and cathode contacts 200 is maintained by the permanent magnet.

Meanwhile, the current storage unit 140 may be charged while periodically receiving current from the on coil unit 120 (or charged through periodic generation of on current), and the current storage unit 140 may correspond to a super capacitor in one example.

Accordingly, the determination unit 150 checks a continuous conduction state of the first current to monitor whether the off coil unit 110 normally operates in real time and the additional control unit 130 is operated through the current prestored in the current storage unit 140 even in failure of the off coil unit 110, and as a result, for example, there may be an effect that the off coil unit 110 normally operates.

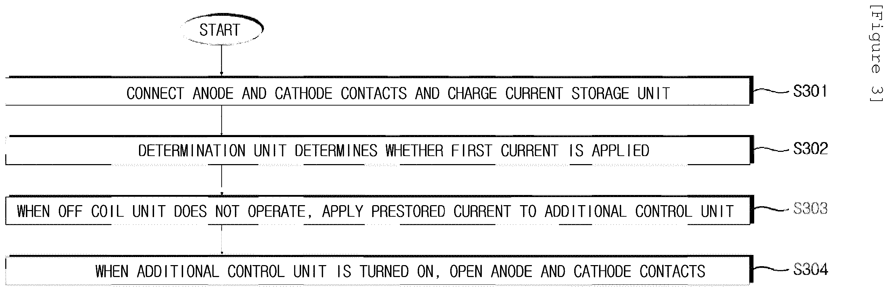

Next, a process for controlling the state of the latch relay 100 will be described in sequence with reference to FIG. 3.

FIG. 3 is a diagram illustrating a process of controlling a state of the latch relay 100 capable of the real-time state control illustrated in FIG. 2 in a sequential order.

Referring to FIG. 3, first, the anode and cathode contacts are connected as the on coil unit is turned on and at the same time, the current storage unit is charged while storing the current supplied from the on coil unit (S301).

Then, the determination unit determines whether the first current is normally applied to the anode and cathode contacts from the off coil unit (S302).

When the off coil unit does not normally operate in a situation (for example, when the first current is not applied, controller operation movement, disconnection etc.) in which the on operation of the off coil unit is required, the current stored in the current control unit is applied to the additional control unit (S303) and while the additional control unit is turned on, a connection state between the off coil unit and the anode and cathode contacts is turned on to open the anode and cathode contacts from each other (S304).

Meanwhile, the present invention includes a battery pack including the latch relay 100 described above.

More specifically, the off coil unit 110 and the on coil unit 120 may be positioned adjacent to the anode and cathode contacts of a battery module (not illustrated) constituted by multiple battery cells, respectively and the latch relay 100 may be constituted by one unit and included in the battery pack.

The present invention has been described with reference to the preferred embodiments of the present invention, but those skilled in the art will understand that the present invention can be variously modified and changed without departing from the scope of the present invention which is defined in the appended claims.

## Claims

1. A latch relay (100) capable of real-time state control, comprising:
an off coil unit (110) positioned adjacent to anode and cathode contacts;
an on coil unit (120) positioned adjacent to anode and cathode contacts;
anode and cathode contacts (200) comprising an iron plate to bond or to release the bonding of the anode and cathode contacts;
an additional control unit (130) electrically connected to the off coil unit (110) and configured to control an on/off operation of the off coil unit (110); and
a current storage unit (140) storing current and supplying the stored current to the additional control unit (130),
wherein, when the off coil unit (110) does not normally operate in a situation in which the on operation of the off coil unit (110) is required, the current stored in the current storage unit (140) is applied to the additional control unit (130), and as a result, the additional control unit (130) is turned on and a connection state of the off coil unit (110) is turned on to release the anode and cathode contacts (200) from each other,
**characterized in that**:
the additional control unit (130) is electrically connected to the on coil unit (120);
the current storage unit (140) is storing current supplied from the on coil unit (120);
wherein the relay further comprises a determination unit (150) configured to determine whether a first current is flowing through the anode and cathode contacts (200) although the off coil unit (110) is turned on,
wherein as a determination result of the determination unit (150), when it is determined that the first current is not flowing in an on operation state of the off coil unit (110), the determination unit (150) is configured to allow the current stored in the current storage unit (140) to be applied to the additional control unit (130) to turn on the off coil unit (110) to release the anode and cathode contacts (200).

2. The latch relay (100) of claim 1, wherein a current value of the first current is smaller than a current value of current required when the anode and cathode contacts (200) are bonded.

3. The latch relay (100) of claim 1, wherein the current storage unit (140) is periodically charged through current periodically supplied from the on coil unit (120).

4. The latch relay (100) of claim 1, wherein the current storage unit (140) is a super capacitor.

5. The latch relay (100) of claim 1, wherein when the determination unit (150) determines that the first current is flowing in the on operation state of the off coil unit (110), the determination unit (150) allows the current stored in the current storage unit (140) to be applied to the additional control unit (130) to physically change a contact state of the additional control unit (130) from an open state to a closed state.

6. The latch relay (100) of claim 1, wherein the additional control unit (130) is a switching element.

7. A method for real-time state control of a latch relay (100) according to at least one of the preceding claims, the method comprising:
storing (S301), by the current storage unit (140), current supplied from the on coil unit (120) when the on coil unit (120) is turned on between the off coil unit (110) and the on coil unit (120) positioned adjacent to anode and cathode contacts (200);
determining (S302), by the determination unit, whether a state in which the first current is applied is maintained;
applying (S303), when the off coil unit (110) does not normally operate in a situation in which the on operation of the off coil unit (110) is required, the current stored in the current storage unit (140) to the additional control unit (130) connected to the off coil unit (110) and the on coil unit (120); and
turning on (S304) a connection state between the off coil unit (110) and the anode and cathode contacts (200) while the additional control unit (130) is turned on to release the anode and cathode contacts (200) from each other.

8. The method of claim 7, wherein the storing of the current supplied from the on coil unit (120) includes:
periodically charging the current storage unit (140) through current periodically supplied from the on coil unit (120).

9. A battery pack comprising:
a battery module; and
a latch relay (100) according to at least one of claims 1 to 6.

## Patentansprüche

1. Verriegelungsrelais (100), das zu einer Echtzeit-Zustandssteuerung fähig ist, umfassend:
• eine Ausschalt-Spuleneinheit (110), die benachbart zu Anoden- und Kathodenkontakten angeordnet ist;
• eine Einschalt-Spuleneinheit (120), die benachbart zu Anoden- und Kathodenkontakten angeordnet ist;
• Anoden- und Kathodenkontakte (200), die eine Eisenplatte umfassen, um die Verbindung der Anoden- und Kathodenkontakte herzustellen oder zu trennen;
• eine zusätzliche Steuereinheit (130), die elektrisch mit der Ausschalt-Spuleneinheit (110) verbunden und so konfiguriert ist, dass sie einen Ein-/Ausschaltbetrieb der Ausschalt-Spuleneinheit (110) steuert; und
• eine Stromspeichereinheit (140), die Strom speichert und den gespeicherten Strom der zusätzlichen Steuereinheit (130) zuführt,
wobei, wenn die Ausschalt-Spuleneinheit (110) in einer Situation, in der der Einschaltbetrieb der Ausschalt-Spuleneinheit (110) erforderlich ist, nicht normal arbeitet, der in der Stromspeichereinheit (140) gespeicherte Strom an die zusätzliche Steuereinheit (130) angelegt wird, und als Ergebnis die zusätzliche Steuereinheit (130) eingeschaltet wird und ein Verbindungszustand der Ausschalt-Spuleneinheit (110) aktiviert wird, um die Anoden- und Kathodenkontakte (200) voneinander zu trennen,
**dadurch gekennzeichnet, dass**:
• die zusätzliche Steuereinheit (130) elektrisch mit der Einschalt-Spuleneinheit (120) verbunden ist;
• die Stromspeichereinheit (140) Strom speichert, der von der Einschalt-Spuleneinheit (120) zugeführt wird;
• wobei das Relais ferner eine Bestimmungseinheit (150) umfasst, die so konfiguriert ist, dass sie bestimmt, ob ein erster Strom durch die Anoden- und Kathodenkontakte (200) fließt, obwohl die Ausschalt-Spuleneinheit (110) eingeschaltet ist,
• wobei als ein Bestimmungsergebnis der Bestimmungseinheit (150), wenn bestimmt wird, dass der erste Strom in einem Einschaltbetriebszustand der Ausschalt-Spuleneinheit (110) nicht fließt, die Bestimmungseinheit (150) so konfiguriert ist, dass sie zulässt, dass der in der Stromspeichereinheit (140) gespeicherte Strom an die zusätzliche Steuereinheit (130) angelegt wird, um die Ausschalt-Spuleneinheit (110) einzuschalten und so die Anoden- und Kathodenkontakte (200) zu trennen.

2. Verriegelungsrelais (100) nach Anspruch 1, wobei ein Stromwert des ersten Stroms kleiner als ein Stromwert des Stroms ist, der erforderlich ist, wenn die Anoden- und Kathodenkontakte (200) verbunden sind.

3. Verriegelungsrelais (100) nach Anspruch 1, wobei die Stromspeichereinheit (140) periodisch durch Strom geladen wird, der periodisch von der Einschalt-Spuleneinheit (120) zugeführt wird.

4. Verriegelungsrelais (100) nach Anspruch 1, wobei die Stromspeichereinheit (140) ein Superkondensator ist.

5. Verriegelungsrelais (100) nach Anspruch 1, wobei, wenn die Bestimmungseinheit (150) bestimmt, dass der erste Strom im Einschaltbetriebszustand der Ausschalt-Spuleneinheit (110) fließt, die Bestimmungseinheit (150) zulässt, dass der in der Stromspeichereinheit (140) gespeicherte Strom an die zusätzliche Steuereinheit (130) angelegt wird, um einen Kontaktzustand der zusätzlichen Steuereinheit (130) physikalisch von einem offenen Zustand in einen geschlossenen Zustand zu ändern.

6. Verriegelungsrelais (100) nach Anspruch 1, wobei die zusätzliche Steuereinheit (130) ein Schaltelement ist.

7. Verfahren zur Echtzeit-Zustandssteuerung eines Verriegelungsrelais (100) nach mindestens einem der vorhergehenden Ansprüche, wobei das Verfahren umfasst:
• Speichern (S301) des von der Einschalt-Spuleneinheit (120) gelieferten Stroms durch die Stromspeichereinheit (140), wenn die Einschalt-Spuleneinheit (120) eingeschaltet ist, zwischen der Ausschalt-Spuleneinheit (110) und der Einschalt-Spuleneinheit (120), die benachbart zu den Anoden- und Kathodenkontakten (200) angeordnet sind;
• Bestimmen (S302), durch die Bestimmungseinheit, ob ein Zustand, in dem der erste Strom angelegt ist, aufrechterhalten wird;
• Anlegen (S303), wenn die Ausschalt-Spuleneinheit (110) in einer Situation, in der der Einschaltbetrieb der Ausschalt-Spuleneinheit (110) erforderlich ist, nicht normal arbeitet, des in der Stromspeichereinheit (140) gespeicherten Stroms an die zusätzliche Steuereinheit (130), die mit der Ausschalt-Spuleneinheit (110) und der Einschalt-Spuleneinheit (120) verbunden ist; und
• Aktivieren (S304) eines Verbindungszustands zwischen der Ausschalt-Spuleneinheit (110) und den Anoden- und Kathodenkontakten (200), während die zusätzliche Steuereinheit (130) eingeschaltet ist, um die Anoden- und Kathodenkontakte (200) voneinander zu trennen.

8. Verfahren nach Anspruch 7, wobei das Speichern des von der Einschalt-Spuleneinheit (120) zugeführten Stroms umfasst:
• periodisches Laden der Stromspeichereinheit (140) durch Strom, der periodisch von der Einschalt-Spuleneinheit (120) zugeführt wird.

9. Batteriepack, umfassend:
• ein Batteriemodul; und
• ein Verriegelungsrelais (100) nach mindestens einem der Ansprüche 1 bis 6.

## Revendications

1. Relais à verrouillage (100) capable d'une commande d'état en temps réel, comprenant :
• une unité de bobine d'ouverture (110) positionnée adjacente à des contacts d'anode et de cathode ;
• une unité de bobine de fermeture (120) positionnée adjacente à des contacts d'anode et de cathode ;
• des contacts d'anode et de cathode (200) comprenant une plaque de fer pour lier ou pour libérer la liaison des contacts d'anode et de cathode ;
• une unité de commande supplémentaire (130) connectée électriquement à l'unité de bobine d'ouverture (110) et configurée pour commander une opération de marche/arrêt de l'unité de bobine d'ouverture (110) ; et
• une unité de stockage de courant (140) stockant du courant et fournissant le courant stocké à l'unité de commande supplémentaire (130),
dans lequel, lorsque l'unité de bobine d'ouverture (110) ne fonctionne pas normalement dans une situation dans laquelle l'opération de marche de l'unité de bobine d'ouverture (110) est requise, le courant stocké dans l'unité de stockage de courant (140) est appliqué à l'unité de commande supplémentaire (130), et par conséquent, l'unité de commande supplémentaire (130) est mise en marche et un état de connexion de l'unité de bobine d'ouverture (110) est mis en marche pour libérer les contacts d'anode et de cathode (200) l'un de l'autre,
**caractérisé en ce que** :
• l'unité de commande supplémentaire (130) est connectée électriquement à l'unité de bobine de fermeture (120) ;
• l'unité de stockage de courant (140) stocke du courant fourni par l'unité de bobine de fermeture (120) ;
• dans lequel le relais comprend en outre une unité de détermination (150) configurée pour déterminer si un premier courant traverse les contacts d'anode et de cathode (200) bien que l'unité de bobine d'ouverture (110) soit mise en marche,
• dans lequel, en tant que résultat de détermination de l'unité de détermination (150), lorsqu'il est déterminé que le premier courant ne circule pas dans un état d'opération de marche de l'unité de bobine d'ouverture (110), l'unité de détermination (150) est configurée pour permettre au courant stocké dans l'unité de stockage de courant (140) d'être appliqué à l'unité de commande supplémentaire (130) pour mettre en marche l'unité de bobine d'ouverture (110) afin de libérer les contacts d'anode et de cathode (200).

2. Relais à verrouillage (100) selon la revendication 1, dans lequel une valeur de courant du premier courant est inférieure à une valeur de courant de courant requis lorsque les contacts d'anode et de cathode (200) sont liés.

3. Relais à verrouillage (100) selon la revendication 1, dans lequel l'unité de stockage de courant (140) est chargée périodiquement par l'intermédiaire d'un courant fourni périodiquement par l'unité de bobine de fermeture (120).

4. Relais à verrouillage (100) selon la revendication 1, dans lequel l'unité de stockage de courant (140) est un supercondensateur.

5. Relais à verrouillage (100) selon la revendication 1, dans lequel, lorsque l'unité de détermination (150) détermine que le premier courant circule dans l'état d'opération de marche de l'unité de bobine d'ouverture (110), l'unité de détermination (150) permet au courant stocké dans l'unité de stockage de courant (140) d'être appliqué à l'unité de commande supplémentaire (130) pour modifier physiquement un état de contact de l'unité de commande supplémentaire (130) d'un état ouvert à un état fermé.

6. Relais à verrouillage (100) selon la revendication 1, dans lequel l'unité de commande supplémentaire (130) est un élément de commutation.

7. Procédé de commande d'état en temps réel d'un relais à verrouillage (100) selon au moins l'une des revendications précédentes, le procédé comprenant :
• le stockage (S301), par l'unité de stockage de courant (140), de courant fourni par l'unité de bobine de fermeture (120) lorsque l'unité de bobine de fermeture (120) est mise en marche entre l'unité de bobine d'ouverture (110) et l'unité de bobine de fermeture (120) positionnées adjacentes à des contacts d'anode et de cathode (200) ;
• la détermination (S302), par l'unité de détermination, de si un état dans lequel le premier courant est appliqué est maintenu ;
• l'application (S303), lorsque l'unité de bobine d'ouverture (110) ne fonctionne pas normalement dans une situation dans laquelle l'opération de marche de l'unité de bobine d'ouverture (110) est requise, du courant stocké dans l'unité de stockage de courant (140) à l'unité de commande supplémentaire (130) connectée à l'unité de bobine d'ouverture (110) et à l'unité de bobine de fermeture (120) ; et
• la mise en marche (S304) d'un état de connexion entre l'unité de bobine d'ouverture (110) et les contacts d'anode et de cathode (200) pendant que l'unité de commande supplémentaire (130) est mise en marche pour libérer les contacts d'anode et de cathode (200) l'un de l'autre.

8. Procédé selon la revendication 7, dans lequel le stockage du courant fourni par l'unité de bobine de fermeture (120) comprend :
• la charge périodique de l'unité de stockage de courant (140) par l'intermédiaire d'un courant fourni périodiquement par l'unité de bobine de fermeture (120).

9. Bloc-batterie comprenant :
• un module de batterie ; et
• un relais à verrouillage (100) selon au moins l'une des revendications 1 à 6.
